# EUROPÄISCHE PATENTSCHRIFT

(11) **EP 4 370 273 B1**
(45) Veröffentlichungstag und Bekanntmachung des Hinweises auf die Patenterteilung: **27.05.2026**
(21) Anmeldenummer: 22748326.0
(22) Anmeldetag: 11.07.2022
(51) Int. Cl.: G05B 19/402, B23D 47/08, B23D 59/00

(54) **VERFAHREN UND VORRICHTUNG ZUR STEUERUNG DER VORSCHUBGESCHWINDIGKEIT VON KREISSÄGEBLÄTTERN**
METHOD AND DEVICE FOR CONTROLLING THE FEED SPEED OF CIRCULAR SAW BLADES
PROCÉDÉ ET DISPOSITIF DE COMMANDE DE LA VITESSE D'AVANCE DE LAMES DE SCIES CIRCULAIRES

(30) Priorität: 15.07.2021 AT 505832021
(43) Veröffentlichungstag der Anmeldung: 22.05.2024
(73) Patentinhaber: Framag Industrieanlagenbau GmbH, 4873 Frankenburg (AT)
(72) Erfinder: HAAS, Roland, 4222 St. Georgen an der Gusen (AT); HUEMER, Heimo, 4690 Oberndorf (AT); KELLNER, Andreas, 4020 Linz (AT)
(74) Vertreter: KLIMENT & HENHAPEL
(86) Internationale Anmeldenummer: PCT/EP2022/069302
(87) Internationale Veröffentlichungsnummer: WO 2023/285369

(56) Entgegenhaltungen:
- DE-A1- 4 202 724
- DE-A1- 4 405 660

## Beschreibung

Die Erfindung bezieht sich auf ein Verfahren zur Steuerung der Vorschubgeschwindigkeit für ein mit Zähnen versehenes und um ein Drehzentrum rotierendes Sägeblatt relativ zu einem Werkstück während eines Zerspanungsvorganges, wobei am Sägeblatt Sektorenbereiche mit jeweils einem Zahn oder einer Mehrzahl nebeneinander liegender Zähne definierbar sind, wobei während einer Umdrehung des Sägeblattes um das Drehzentrum die Vorschubgeschwindigkeit während eines durch Zähne unterschiedlicher Sektorenbereiche des Sägeblattes bewirkten Zerspanungsvorganges unterschiedlich gewählt wird, wobei sich der Radialabstand der Zähne oder der durchschnittliche Radialabstand der Mehrzahl nebeneinander liegender Zähne unterschiedlicher Sektorenbereiche unterscheidet und die Vorschubgeschwindigkeit während eines durch Zähne von Sektorenbereichen mit einem größeren Radialabstand der Zähne vom Drehzentrum bewirkten Zerspanungsvorganges kleiner gewählt wird, als während eines durch Zähne von Sektorenbereichen mit einem kleineren Radialabstand der Zähne vom Drehzentrum bewirkten Zerspanungsvorganges, gemäß dem Oberbegriff von Anspruch 1. Die Erfindung betrifft des Weiteren eine Zerspanungsvorrichtung umfassend ein mit Zähnen versehenes Sägeblatt, eine Antriebseinrichtung zur Rotation des Sägeblatts um ein Drehzentrum sowie eine Vorschubeinrichtung zur Erzielung einer Relativbewegung des Sägeblatts zu einem Werkstück, wobei die Vorschubeinrichtung eine Steuereinheit zur Steuerung der Vorschubgeschwindigkeit des Sägeblattes relativ zum Werkstück umfasst und das Sägeblatt Sektorenbereiche mit jeweils einem Zahn oder einer Mehrzahl nebeneinander liegender Zähne aufweist, wobei die Steuereinheit ausgelegt ist während einer Umdrehung des Sägeblattes um das Drehzentrum die Vorschubgeschwindigkeit während eines durch Zähne unterschiedlicher Sektorenbereiche des Sägeblattes bewirkten Zerspanungsvorganges unterschiedlich zu steuern, indem die Vorschubgeschwindigkeit während eines durch Zähne von Sektorenbereichen des Sägeblattes mit einem größeren Radialabstand der Zähne vom Drehzentrum oder einem größeren durchschnittlichen Radialabstand der Mehrzahl nebeneinander liegender Zähne vom Drehzentrum bewirkten Zerspanungsvorganges kleiner ist, als während eines durch Zähne von Sektorenbereichen des Sägeblattes mit einem kleineren Radialabstand der Zähne vom Drehzentrum oder einem kleineren durchschnittlichen Radialabstand der Mehrzahl nebeneinander liegender Zähne vom Drehzentrum bewirkten Zerspanungsvorganges, gemäß dem Oberbegriff von Anspruch 4.

Während des Zerspanungsvorganges werden die Zähne des Sägeblattes stark belastet. Die Zähne können dabei angeformt oder geschraubt sein, wobei die Sägeblätter im letztgenannten Fall mitunter auch als Scheibenfräser bezeichnet werden, im Folgenden aber ebenfalls vom Begriff "Sägeblätter" umfasst sind. Durch geeignete Steuerung des Zerspanungsvorganges wird versucht, die Belastung bei Aufrechterhaltung eines optimalen Schnittergebnisses so gering wie möglich zu halten. Der Zerspanungsvorgang selbst wird dabei mithilfe einer Steuerung vorgenommen, die die Schneideparameter wie Umdrehungsgeschwindigkeit des Sägeblattes sowie Vorschubgeschwindigkeit des Sägeblattes vorzugsweise automatisiert steuert. Dabei spielt die Zustandsüberwachung des Sägeblattes eine zunehmend wichtige Rolle. Hierbei werden mithilfe von Sensoren geometrische, statische sowie dynamische Analysen des Sägeblattes im Ruhezustand, im Leerlauf sowie während des Zerspanungsvorganges vorgenommen und aus diesen Analysen Rückschlüsse auf die Belastung des Sägeblattes gezogen, um in weiterer Folge den Zerspanungsvorgang entsprechend zu steuern, oder übermäßige Belastungen frühzeitig zu erkennen und entsprechende Wartungs- oder Reparaturmaßnahmen zu ergreifen. Diese Sensoren können dabei Kameras, Kraft- oder Dehnmessstreifen, Richtmikrofone, Piezosensoren und dergleichen sein. Ein gattungsgemäßes Verfahren sowie eine gattungsgemäße Vorrichtung wurden in der DE 42 02 724 A1 beschrieben.

Ein Verfahren gemäß dem Oberbegriff des Anspruchs 1 und eine Zerspanungsvorrichtung gemäß dem Oberbegriff des Anspruchs 4 sind aus DE 44 05 660 A1 bekannt.

In der DE 19634336 A1 werden beispielsweise eine Vorrichtung und ein Verfahren zum Vermessen der Sägeblattverzahnung von Kreissägeblättern, insbesondere zum Vermessen der Zahnform, Zahnteilung, Zahnhöhe (Zahntiefe) sowie des Rund- und Planlaufs mittels optischer Abtastverfahren beschrieben.

Die DE 10023566 A1 zeigt eine Vorrichtung und ein Verfahren zur optischen Überprüfung der Sägeblätter und der einzelnen Sägezähne.

In der EP 0949480 A2 wird eine Vorrichtung zur Vermessung der Geometrie der Sägeblätter beschrieben, um wesentliche Parameter wie zum Beispiel Spanwinkel und Freiwinkel an den Zähnen zu bestimmen.

Die EP 0403908 A2 zeigt die Vermessung eines spanabhebenden Werkzeuges mit einer Kamera.

In der GB 1072569 A, CH 653600 A5, WO 0107868 A1 und US 5861564 A werden weitere Vorrichtungen und Verfahren zur optischen Vermessung der Geometrie von Sägezähnen beschrieben.

Die DE 202017103056 U und die DE 102017126434 A1 zeigen die Erfassung von Parametern für die Vermessung und Überwachung von Sägeblättern während des Betriebes. Die EP 0969340 A1 beschreibt die Überwachung des IST-Antriebsstromes während des Betriebes eines Sägeblattes und dessen Vergleich mit einem SOLL-Antriebsstrom sowie eine entsprechenden Steuerung des Sägeblattes.

Im genannten Stand der Technik wird eine geometrische Vermessung des Sägeblattes verwendet, um Belastungen oder Verformungen des Sägeblattes oder seiner Zähne frühzeitig zu erkennen und entsprechende Wartungs- oder Reparaturmaßnahmen zu ergreifen.

Das Ziel der Erfindung besteht hingegen darin Belastungen des Sägeblattes zu reduzieren, sodass Wartungs- oder Reparaturmaßnahmen hintangehalten werden können und die Standzeit erhöht wird.

Dieses Ziel wird durch die Merkmale von Anspruch 1 erreicht. Anspruch 1 bezieht sich auf ein Verfahren zur Steuerung der Vorschubgeschwindigkeit für ein mit Zähnen versehenes und um ein Drehzentrum rotierendes Sägeblatt relativ zu einem Werkstück während eines Zerspanungsvorganges, wobei am Sägeblatt Sektorenbereiche mit jeweils einem Zahn oder einer Mehrzahl nebeneinander liegender Zähne definierbar sind, wobei während einer Umdrehung des Sägeblattes um das Drehzentrum die Vorschubgeschwindigkeit während eines durch Zähne unterschiedlicher Sektorenbereiche des Sägeblattes bewirkten Zerspanungsvorganges unterschiedlich gewählt wird, wobei sich der Radialabstand der Zähne oder der durchschnittliche Radialabstand der Mehrzahl nebeneinander liegender Zähne unterschiedlicher Sektorenbereiche unterscheidet und die Vorschubgeschwindigkeit während eines durch Zähne von Sektorenbereichen mit einem größeren Radialabstand der Zähne vom Drehzentrum bewirkten Zerspanungsvorganges kleiner gewählt wird, als während eines durch Zähne von Sektorenbereichen mit einem kleineren Radialabstand der Zähne vom Drehzentrum bewirkten Zerspanungsvorganges. Erfindungsgemäß wird vorgeschlagen, dass eine Messeinrichtung zum Messen des Radialabstandes der Zähne von einem Drehzentrum des Sägeblattes vorgesehen ist, die mit der Steuereinheit verbunden ist. Das erfindungsgemäße Verfahren reduziert Belastungen des Sägeblattes somit durch eine Kombination einer geometrischen Zustandsüberwachung des Sägeblattes mit einer geeigneten Steuerung des Zerspanungsprozesses. Die Anmelderin hat festgestellt, dass sich mitunter bei Sägeblättern im Zuge der Fertigung, der Montage oder des Betriebes entstandene Sektorenbereiche mit jeweils einem Zahn oder einer Mehrzahl nebeneinander liegender Zähne feststellen lassen, wobei der Radialabstand der Zähne oder der durchschnittliche Radialabstand der Mehrzahl nebeneinander liegender Zähne unterschiedlicher Sektorenbereiche unterschiedlich sind. Diese Abweichungen zeigen sich zumeist in Form einer Exzentrizität des Sägeblattes mit einem ersten Sektorenbereich des Sägeblattes mit einem größten durchschnittlichen Radialabstand der Zähne dieses ersten Sektorenbereiches und einem zweiten, zumeist gegenüberliegenden Sektorenbereich des Sägeblattes mit einem kleinsten durchschnittlichen Radialabstand der Zähne dieses zweiten Sektorenbereiches. Beobachtungen der Anmelderin zeigen, dass Verschleiß und Bruch von Zähnen verstärkt in Segmentbereichen mit größerem Radialabstand auftreten, wobei es sich hier bei einem Radius des Sägeblattes im Meterbereich um Abweichungen vom durchschnittlichen Radialabstand der Zähne des Sägeblattes im Bereich von Mikrometer bis Hundertstel Millimeter handelt. Als Radialabstand der Zähne kann etwa der Abstand der Zahnspitze vom Drehzentrum herangezogen werden, da sie messtechnisch leicht erfassbar ist, es wäre aber auch denkbar andere Bezugspunkte zur Bestimmung der Radialabstände zu verwenden. Durch Messen des Radialabstandes eines jeden Zahnes durch an sich bekannte Verfahren kann festgestellt werden, ob sich erfindungsgemäße Sektorenbereiche definieren lassen, in denen der durchschnittliche Radialabstand größer ist als in anderen Sektorenbereichen. Falls das der Fall ist, wird der Zerspanungsvorgang in weiterer Folge so gesteuert, dass die Vorschubgeschwindigkeit während einer Umdrehung des Sägeblattes verringert wird, solange Zähne des Sektorenbereiches mit größerem Radialabstand am Zerspanungsvorgang beteiligt sind. Durch die geringere Vorschubgeschwindigkeit können die Belastungen der Zähne dieses Sektorenbereiches während des Zerspanungsvorganges reduziert werden. Die Vorschubgeschwindigkeit kann im Vergleich dazu wieder erhöht werden, sobald Zähne eines Sektorenbereiches mit kleinerem Radialabstand am Zerspanungsvorgang beteiligt sind. Das erfindungsgemäße Verfahren eignet sich somit für Sägeblätter, bei denen sich die Vorschubgeschwindigkeit während einer Umdrehung des Sägeblattes erfindungsgemäß steuern lässt, was bei vielen Anwendungen von Sägeblättern mit einem Radius im Meterbereich und Umdrehungsgeschwindigkeiten im Bereich von 100m/min der Fall ist. Durch die verringerte Belastung der Zähne aufgrund der Steuerung der Vorschubgeschwindigkeit können Wartungs- oder Reparaturmaßnahmen hintangehalten und die Standzeit erhöht werden.

Sofern es die Geometrie des Sägeblattes zulässt, könnte die Einteilung in Sektorenbereiche so genau vorgenommen werden, dass jeder Sektorenbereich lediglich einen Zahn beinhaltet. Die Steuerung der Vorschubgeschwindigkeit wäre in entsprechender Weise auf den Radialabstand eines jeden Zahnes abgestimmt vorzunehmen. Eine solche Vorgangsweise wäre etwa beim Anschnittvorgang, bei dem nur einzelne Zähne im Eingriff mit den Werkstück sind, vorteilhaft.

Für den oben genannten Fall einer Exzentrizität des Sägeblattes wird hingegen vorgeschlagen, dass die Vorschubgeschwindigkeit während eines durch Zähne eines Sektorenbereiches des Sägeblattes mit einer Mehrzahl nebeneinander liegender Zähne mit einem größten durchschnittlichen Radialabstand der Zähne vom Drehzentrum bewirkten Zerspanungsvorganges eine Minimalgeschwindigkeit erreicht, und die Vorschubgeschwindigkeit während eines durch Zähne eines Sektorenbereiches des Sägeblattes mit einer Mehrzahl nebeneinander liegender Zähne mit einem kleinsten durchschnittlichen Radialabstand der Zähne vom Drehzentrum bewirkten Zerspanungsvorganges eine Maximalgeschwindigkeit erreicht. Die Vorschubgeschwindigkeit wird somit während einer Umdrehung des Sägeblattes zwischen einer Minimalgeschwindigkeit und einer Maximalgeschwindigkeit variiert. Das Ausmaß der Erhöhung und der Verringerung der Vorschubgeschwindigkeit im Zuge des erfindungsgemäßen Verfahrens wird in der Regel von der Stärke der Exzentrizität abhängen. Nähert sich ein Sektorenbereich mit größerem Radialabstand der Zähne zum Drehzentrum im Zuge der Rotation des Sägeblattes dem Werkstück, resultiert die Zunahme des Radialabstandes in einer scheinbaren Erhöhung der Vorschubgeschwindigkeit. Zumindest diese scheinbare Erhöhung der Vorschubgeschwindigkeit ist über eine erfindungsgemäße Verringerung der Vorschubgeschwindigkeit auszugleichen. Nähert sich wiederum ein Sektorenbereich mit kleinerem Radialabstand der Zähne zum Drehzentrum im Zuge der Rotation des Sägeblattes dem Werkstück, resultiert die Abnahme des Radialabstandes in einer scheinbaren Verringerung der Vorschubgeschwindigkeit. Zumindest diese scheinbare Verringerung der Vorschubgeschwindigkeit ist wiederum über eine erfindungsgemäße Erhöhung der Vorschubgeschwindigkeit auszugleichen. An dieser Stelle sei außerdem erwähnt, dass sich die Vorschubgeschwindigkeit auf eine Relativbewegung zwischen dem Sägeblatt und dem Werkstück bezieht, es also unerheblich ist, ob das Sägeblatt relativ zum Werkstück bewegt wird, oder das Werkstück relativ zum Sägeblatt.

Wie noch näher ausgeführt werden wird, kann bei geringer Exzentrizität des Sägeblattes beispielsweise ein dreiecksförmiger Verlauf der Vorschubgeschwindigkeit über eine Umdrehung des Sägeblattes gewählt werden. Alternativ wird auch ein trapezförmiger Verlauf vorgeschlagen, indem es sich bei der Vorschubgeschwindigkeit während eines durch Zähne eines Sektorenbereiches des Sägeblattes mit einer Mehrzahl nebeneinander liegender Zähne mit einem größten durchschnittlichen Radialabstand der Zähne vom Drehzentrum bewirkten Zerspanungsvorganges um eine konstante Minimalgeschwindigkeit handelt, und es sich bei der Vorschubgeschwindigkeit während eines durch Zähne eines Sektorenbereiches des Sägeblattes mit einer Mehrzahl nebeneinander liegender Zähne mit einem kleinsten durchschnittlichen Radialabstand der Zähne vom Drehzentrum bewirkten Zerspanungsvorganges um eine konstante Maximalgeschwindigkeit handelt. Phasen gleichbleibender Vorschubgeschwindigkeit gehen somit über vergleichsweise rasche Änderungen der Vorschubgeschwindigkeit ineinander über, was beispielsweise bei Sägeblättern mit größerer Exzentrizität vorteilhaft sein wird.

Des Weiteren betrifft die Erfindung eine Zerspanungsvorrichtung umfassend ein mit Zähnen versehenes Sägeblatt, eine Antriebseinrichtung zur Rotation des Sägeblatts um ein Drehzentrum sowie eine Vorschubeinrichtung zur Erzielung einer Relativbewegung des Sägeblatts zu einem Werkstück, wobei die Vorschubeinrichtung eine Steuereinheit zur Steuerung der Vorschubgeschwindigkeit des Sägeblattes relativ zum Werkstück umfasst und das Sägeblatt Sektorenbereiche mit jeweils einem Zahn oder einer Mehrzahl nebeneinander liegender Zähne aufweist, wobei die Steuereinheit ausgelegt ist während einer Umdrehung des Sägeblattes um das Drehzentrum die Vorschubgeschwindigkeit während eines durch Zähne unterschiedlicher Sektorenbereiche des Sägeblattes bewirkten Zerspanungsvorganges unterschiedlich zu steuern, indem die Vorschubgeschwindigkeit während eines durch Zähne von Sektorenbereichen des Sägeblattes mit einem größeren Radialabstand der Zähne vom Drehzentrum oder einem größeren durchschnittlichen Radialabstand der Mehrzahl nebeneinander liegender Zähne vom Drehzentrum bewirkten Zerspanungsvorganges kleiner ist, als während eines durch Zähne von Sektorenbereichen des Sägeblattes mit einem kleineren Radialabstand der Zähne vom Drehzentrum oder einem kleineren durchschnittlichen Radialabstand der Mehrzahl nebeneinander liegender Zähne vom Drehzentrum bewirkten Zerspanungsvorganges. Erfindungsgemäß wird hierbei vorgeschlagen, dass die Zerspanungsvorrichtung eine Messeinrichtung zum Messen des Radialabstandes der Zähne von einem Drehzentrum des Sägeblattes umfasst, die mit der Steuereinheit verbunden ist.

Das Vermessen der Radialabstände der Zähne des Sägeblatts zum Drehzentrum kann dabei auf einem Prüfstand beim Hersteller oder Anwender erfolgen. Die Ergebnisse können in weiterer Folge in der Steuereinheit implementiert werden, um den Vorschub erfindungsgemäß zu steuern. Erfindungsgemäß wird jedoch vorgeschlagen, dass die Zerspanungsvorrichtung eine Messeinrichtung zum Messen des Radialabstandes der Zähne von einem Drehzentrum des Sägeblattes umfasst, die mit der Steuereinheit verbunden ist. Das Vermessen der Radialabstände der Zähne des Sägeblatts zum Drehzentrum kann somit laufend vorgenommen werden, beispielsweise während eines Leerlaufes des Sägeblattes, um die geometrischen Verhältnisse am Sägeblatt laufend zu überprüfen und mit den Steuerungsvorgaben zu vergleichen. Freilich ist es auch denkbar diese Messdaten an eine Fernüberwachung zu senden, wo die geometrischen Verhältnisse am Sägeblatt laufend überprüft, mit den aktuellen Steuerungsvorgaben verglichen und gegebenenfalls neue Steuerungsvorgaben an die Steuereinheit übersendet werden, um den Betrieb des Sägeblattes zu optimieren und die Standzeit zu erhöhen.

Die Erfindung wird in weiterer Folge anhand von Ausführungsbeispielen mithilfe der beiliegenden Zeichnungen näher erläutert. Es zeigen hierbei die
Fig. 1 ein reales Beispiel einer Vermessung der Radialabstände der Zähne eines Sägeblattes vom Drehzentrum,
Fig. 2 eine mögliche Steuerungskurve für die Vorschubgeschwindigkeit mit dreieckförmigem Verlauf, und die
Fig. 3 eine weitere Steuerungskurve für die Vorschubgeschwindigkeit mit trapezförmigem Verlauf.

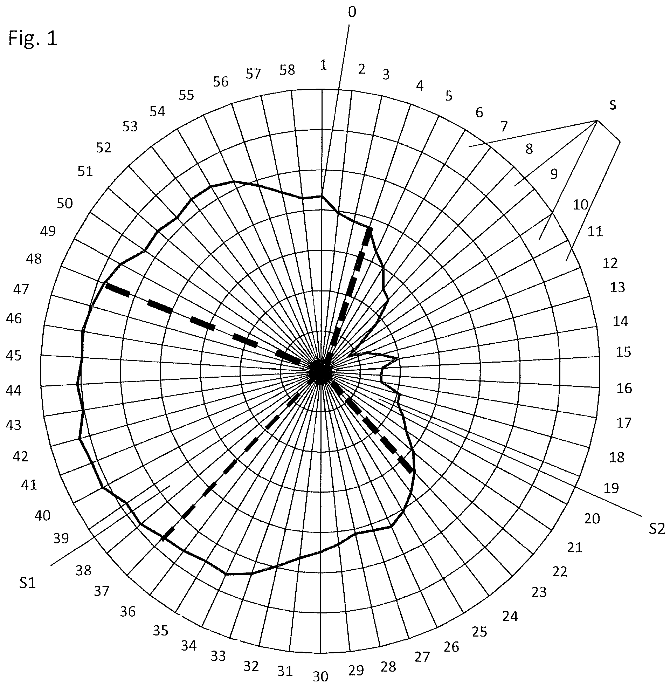

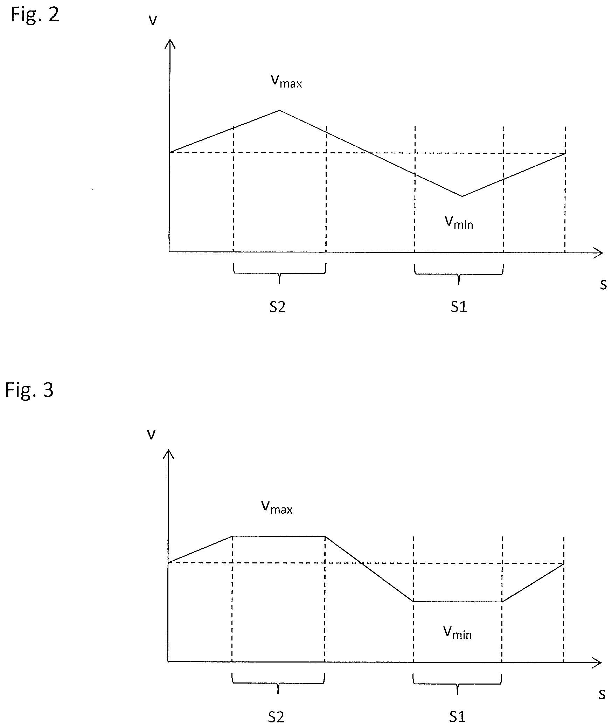

Zunächst wird auf die Fig. 1 Bezug genommen, die ein reales Beispiel einer Vermessung der Radialabstände der Zähne eines Sägeblattes vom Drehzentrum zeigt. Die Vermessung kann etwa mithilfe optischer Verfahren vorgenommen werden, wobei im Umfangsbereich des Sägeblattes eine Messeinrichtung angeordnet ist, die von den im Umfangsbereich angeordneten Zähnen des Sägeblattes durchlaufen wird. Als Radialabstand der Zähne kann wie bereits erwähnt der Abstand der Zahnspitze vom Drehzentrum herangezogen werden, da sie messtechnisch leicht erfassbar ist, es wäre aber auch denkbar andere Bezugspunkte zur Bestimmung der Radialabstände zu verwenden. Das Messen des Radialabstandes kann dabei in Form von Absolutwerten vorgenommen werden, oder in Form von Relativwerten als Abweichungen von einem Bezugswert. Die Fig. 1 zeigt Messwerte für 58 Zähne eines Sägeblattes in Form von Abweichungen von einem Bezugswert, wobei jedem Zahn ein Sektor s zugeordnet ist. Für jeden Sektor s ist die entsprechende Abweichung auf einem radialen Strahl aufgetragen, wobei die Messpunkte miteinander verbunden wurden um die in der Fig. 1 ersichtliche Kurve zu erzeugen. Der Bezugswert ist in einem ersten Sektor s mit "0" gekennzeichnet. Im Uhrzeigersinn der Fig. 1 nehmen die Radialabstände der Zähne beginnend mit dem ersten Sektor s zunächst ab, um im elften Sektor einen Minimalwert zu erreichen. Die Radialabstände der Zähne nehmen in weiterer Folge wieder zu und erreichen im zweiundvierzigsten Sektor s einen Maximalwert. Die Radialabstände der Zähne nehmen in weiterer Folge wieder ab und nehmen schließlich wieder den Bezugswert im ersten Sektor s ein. Die Abweichungen liegen dabei im Bereich von Mikrometer bis Hundertstel Millimeter. Das Sägeblatt zeigt somit eine Exzentrizität, für die zwei Sektorenbereiche S1 und S2 mit jeweils mehreren Sektoren s definiert werden können, wobei die Zähne eines ersten Sektorenbereiches S1 des Sägeblattes eine Mehrzahl nebeneinander liegender Zähne umfasst, die einen größten durchschnittlichen Radialabstand vom Drehzentrum aufweisen, und die Zähne eines zweiten Sektorenbereiches S2 des Sägeblattes eine Mehrzahl nebeneinander liegender Zähne umfasst, die einen kleinsten durchschnittlichen Radialabstand vom Drehzentrum aufweisen. Die Wahl der Sektorengrenzen für die beiden Sektorenbereiche S1, S2, die in der Fig. 1 durch die gestrichelten Linien angedeutet sind, ist aber grundsätzlich nicht entscheidend und lediglich im Zusammenhang mit dem Steuerungsverlauf der Vorschubgeschwindigkeit v gemäß der Fig. 3 relevant, wie noch näher ausgeführt werden wird.

Die Feststellung einer Exzentrizität des Sägeblattes gemäß der Fig. 1 dient erfindungsgemäß zur Festlegung einer über eine Umdrehung des Sägeblattes variablen Vorschubgeschwindigkeit v, indem die Vorschubgeschwindigkeit v während eines durch Zähne des ersten Sektorenbereiches S1 des Sägeblattes bewirkten Zerspanungsvorganges kleiner gewählt wird, als während eines durch Zähne des zweiten Sektorenbereiches S2 des Sägeblattes bewirkten Zerspanungsvorganges. Während des Zerspanungsvorganges dringen die Zähne des Sägeblattes üblicher Weise nicht gleichzeitig in das Werkstück ein, sondern je nach Eindringtiefe in das Werkstück nur die Zähne einer größeren oder kleineren Anzahl nebeneinander liegender Sektoren s. Für Sägeblätter, bei denen sich die Vorschubgeschwindigkeit v während einer Umdrehung des Sägeblattes ändern lässt, kann die Vorschubgeschwindigkeit v für unterschiedliche Sektorenbereiche während ihrer jeweiligen Beteiligung am Zerspanungsvorgang unterschiedlich gewählt werden, was bei vielen Anwendungen von Sägeblättern mit einem Radius im Meterbereich und Umdrehungsgeschwindigkeiten im Bereich von 100m/min der Fall ist.

Ein möglicher Steuerungsverlauf für die Vorschubgeschwindigkeit v ist in der Fig. 2 dargestellt. Die Vorschubgeschwindigkeit v wird dabei während einer Umdrehung des Sägeblattes zwischen einer Minimalgeschwindigkeit vₘᵢₙ und einer Maximalgeschwindigkeit vₘₐₓ variiert. Das Ausmaß der Erhöhung und der Verringerung der Vorschubgeschwindigkeit v im Zuge des erfindungsgemäßen Verfahrens wird in der Regel von der Stärke der Exzentrizität abhängen, wie bereits ausgeführt wurde. Der Wechsel zwischen der Minimalgeschwindigkeit vₘᵢₙ und der Maximalgeschwindigkeit vₘₐₓ kann dabei über einen dreiecksförmigen Verlauf der Vorschubgeschwindigkeit v über eine Umdrehung des Sägeblattes vorgenommen werden, wie er in der Fig. 2 ersichtlich ist.

Alternativ kann der Steuerungsverlauf gemäß der Fig. 3 auch so vorgenommen werden, dass während der Beteiligung von Zähnen des in der Fig. 1 eingezeichneten ersten Sektorenbereiches S1 am Zerspanungsvorgang eine konstante Minimalgeschwindigkeit vₘᵢₙ eingenommen wird, und während der Beteiligung von Zähnen des in der Fig. 1 eingezeichneten zweiten Sektorenbereiches S2 am Zerspanungsvorgang eine konstante Maximalgeschwindigkeit vₘₐₓ. Diese Phasen gleichbleibender Vorschubgeschwindigkeit v gehen dabei über vergleichsweise rasche Änderungen der Vorschubgeschwindigkeit v ineinander über, wie in der Fig. 3 ersichtlich ist. Freilich ist es auch denkbar komplexere Steuerungsverläufe für die Vorschubgeschwindigkeit v als jene der Fig. 2 und 3 vorzusehen, wenn die Vermessung des Sägeblattes eine komplexere Geometrie gezeigt hat. Sofern es die Geometrie des Sägeblattes zulässt, könnte die Einteilung in Sektorenbereiche S sogar so genau vorgenommen werden, dass jeder Sektorenbereich S lediglich einen Zahn beinhaltet. Die Steuerung der Vorschubgeschwindigkeit v wäre in entsprechender Weise auf den Radialabstand eines jeden Zahnes abgestimmt vorzunehmen. Eine solche Vorgangsweise wäre etwa beim Anschnittvorgang, bei dem nur einzelne Zähne im Eingriff mit den Werkstück sind, vorteilhaft.

Die für die Vermessung des Sägeblattes erforderliche Messeinrichtung kann dabei auch Teil der Zerspanungsvorrichtung sein und mit der Steuereinheit verbunden sein. Das Vermessen der Radialabstände der Zähne des Sägeblatts zum Drehzentrum kann somit laufend vorgenommen werden, um die geometrischen Verhältnisse am Sägeblatt laufend zu überprüfen, mit den aktuellen Steuerungsvorgaben zu vergleichen und gegebenenfalls neue Steuerungsvorgaben an die Steuereinheit zu übersenden. Auf diese Weise können der Betrieb des Sägeblattes optimiert und die Standzeit erhöht werden.

## Patentansprüche

1. Verfahren zur Steuerung der Vorschubgeschwindigkeit (v) für ein mit Zähnen versehenes und um ein Drehzentrum rotierendes Sägeblatt relativ zu einem Werkstück während eines Zerspanungsvorganges, wobei am Sägeblatt Sektorenbereiche (S) mit jeweils einem Zahn oder einer Mehrzahl nebeneinander liegender Zähne definierbar sind, wobei während einer Umdrehung des Sägeblattes um das Drehzentrum die Vorschubgeschwindigkeit (v) während eines durch Zähne unterschiedlicher Sektorenbereiche (S) des Sägeblattes bewirkten Zerspanungsvorganges unterschiedlich gewählt wird, wobei sich der Radialabstand der Zähne oder der durchschnittliche Radialabstand der Mehrzahl nebeneinander liegender Zähne unterschiedlicher Sektorenbereiche (S) unterscheidet und die Vorschubgeschwindigkeit (v) während eines durch Zähne von Sektorenbereichen (S1) mit einem größeren Radialabstand der Zähne vom Drehzentrum bewirkten Zerspanungsvorganges kleiner gewählt wird, als während eines durch Zähne von Sektorenbereichen (S2) mit einem kleineren Radialabstand der Zähne vom Drehzentrum bewirkten Zerspanungsvorganges, **dadurch gekennzeichnet, dass** die Sektorenbereiche durch Messen des Radialabstandes eines jeden Zahnes definiert werden.

2. Verfahren nach Anspruch 1, **dadurch gekennzeichnet, dass** die Vorschubgeschwindigkeit (v) während eines durch Zähne eines Sektorenbereiches (S1) des Sägeblattes mit einer Mehrzahl nebeneinander liegender Zähne mit einem größten durchschnittlichen Radialabstand der Zähne vom Drehzentrum bewirkten Zerspanungsvorganges eine Minimalgeschwindigkeit (vₘᵢₙ) erreicht, und die Vorschubgeschwindigkeit (v) während eines durch Zähne eines Sektorenbereiches (S2) des Sägeblattes mit einer Mehrzahl nebeneinander liegender Zähne mit einem kleinsten durchschnittlichen Radialabstand der Zähne vom Drehzentrum bewirkten Zerspanungsvorganges eine Maximalgeschwindigkeit (vₘₐₓ) erreicht.

3. Verfahren nach Anspruch 1 oder 2, **dadurch gekennzeichnet, dass** es sich bei der Vorschubgeschwindigkeit (v) während eines durch Zähne eines Sektorenbereiches (S1) des Sägeblattes mit einer Mehrzahl nebeneinander liegender Zähne mit einem größten durchschnittlichen Radialabstand der Zähne vom Drehzentrum bewirkten Zerspanungsvorganges um eine konstante Minimalgeschwindigkeit (vₘᵢₙ) handelt, und es sich bei der Vorschubgeschwindigkeit (v) während eines durch Zähne eines Sektorenbereiches (S2) des Sägeblattes mit einer Mehrzahl nebeneinander liegender Zähne mit einem kleinsten durchschnittlichen Radialabstand der Zähne vom Drehzentrum bewirkten Zerspanungsvorganges um eine konstante Maximalgeschwindigkeit (vₘₐₓ) handelt.

4. Zerspanungsvorrichtung umfassend ein mit Zähnen versehenes Sägeblatt, eine Antriebseinrichtung zur Rotation des Sägeblatts um ein Drehzentrum sowie eine Vorschubeinrichtung zur Erzielung einer Relativbewegung des Sägeblatts zu einem Werkstück, wobei die Vorschubeinrichtung eine Steuereinheit zur Steuerung der Vorschubgeschwindigkeit (v) des Sägeblattes relativ zum Werkstück umfasst und das Sägeblatt Sektorenbereiche (S) mit jeweils einem Zahn oder einer Mehrzahl nebeneinander liegender Zähne aufweist, wobei die Steuereinheit ausgelegt ist während einer Umdrehung des Sägeblattes um das Drehzentrum die Vorschubgeschwindigkeit (v) während eines durch Zähne unterschiedlicher Sektorenbereiche (S) des Sägeblattes bewirkten Zerspanungsvorganges unterschiedlich zu steuern, indem die Vorschubgeschwindigkeit (v) während eines durch Zähne von Sektorenbereichen (S1) des Sägeblattes mit einem größeren Radialabstand der Zähne vom Drehzentrum oder einem größeren durchschnittlichen Radialabstand der Mehrzahl nebeneinander liegender Zähne vom Drehzentrum bewirkten Zerspanungsvorganges kleiner ist, als während eines durch Zähne von Sektorenbereichen (S2) des Sägeblattes mit einem kleineren Radialabstand der Zähne vom Drehzentrum oder einem kleineren durchschnittlichen Radialabstand der Mehrzahl nebeneinander liegender Zähne vom Drehzentrum bewirkten Zerspanungsvorganges, **dadurch gekennzeichnet, dass** eine Messeinrichtung zum Messen des Radialabstandes der Zähne von einem Drehzentrum des Sägeblattes vorgesehen ist, die mit der Steuereinheit verbunden ist.

## Claims

1. Method for controlling the feed rate (v) of a toothed saw blade rotating around a center of rotation relative to a workpiece during a machining operation, wherein sector areas (S) with one tooth or a plurality of adjacent teeth can be defined on the saw blade, wherein during one revolution of the saw blade around the center of rotation the feed rate (v) is selected differently during a machining operation caused by teeth of different sector areas (S) of the saw blade, wherein the radial spacing of the teeth or the average radial spacing of the plurality of adjacent teeth of different sector areas (S) differs, and the feed rate (v) is selected lower during a machining operation caused by teeth of sector areas (S1) with a larger radial spacing of the teeth from the center of rotation than during a machining operation caused by teeth of sector areas (S2) with a smaller radial spacing of the teeth from the center of rotation, **characterized in that** the sector areas are defined by measuring the radial spacing of each tooth.

2. Method according to claim 1, **characterized in that** the feed rate (v) during a machining process carried out by teeth of a sector area (S1) of the saw blade with a plurality of adjacent teeth with a largest average radial distance of the teeth from the center of rotation reaches a minimum speed (vₘᵢₙ), and the feed rate (v) during a machining process carried out by teeth of a sector area (S2) of the saw blade with a plurality of adjacent teeth with a smallest average radial distance of the teeth from the center of rotation reaches a maximum speed (vₘₐₓ).

3. Method according to claim 1 or 2, **characterized in that** the feed rate (v) during a machining process carried out by teeth of a sector area (S1) of the saw blade with a plurality of adjacent teeth having the largest average radial distance of the teeth from the center of rotation is a constant minimum rate (vₘᵢₙ), and the feed rate (v) during a machining process carried out by teeth of a sector area (S2) of the saw blade with a plurality of adjacent teeth having the smallest average radial distance of the teeth from the center of rotation is a constant maximum rate (vₘₐₓ).

4. A machining device comprising a toothed saw blade, a drive device for rotating the saw blade around a center of rotation, and a feed device for achieving relative movement of the saw blade to a workpiece, wherein the feed device includes a control unit for controlling the feed rate (v) of the saw blade relative to the workpiece, and the saw blade has sector sections (S) with one tooth or a plurality of adjacent teeth, wherein the control unit is designed to control the feed rate (v) differently during a machining operation caused by teeth of different sector sections (S) of the saw blade during one revolution of the saw blade around the center of rotation, by making the feed rate (v) lower during a machining operation caused by teeth of sector sections (S1) of the saw blade with a larger radial distance of the teeth from the center of rotation or a larger average radial distance of the plurality of adjacent teeth from the center of rotation than during a machining operation caused by teeth of sector sections (S2) of the saw blade with a smaller radial distance of the teeth from the center of rotation or a smaller average radial distance of the majority of adjacent teeth from the rotation center, **characterized in that** a measuring device for measuring the radial distance of the teeth from a rotation center of the saw blade is provided, which is connected to the control unit.

## Revendications

1. Procédé de contrôle de la vitesse d'avancement (v) par rapport à une pièce d'œuvre d'une lame de scie munie de dents et tournant autour d'un centre de rotation pendant une opération d'enlèvement de copeaux, dans lequel des secteurs (S) comportant chacun une dent ou plusieurs dents placées les unes à côté des autres peuvent être définis sur la lame de scie, dans lequel la vitesse d'avancement (v) est choisie différemment pendant un tour complet de la lame de scie autour du centre de rotation pendant une opération d'enlèvement de copeaux réalisée par des dents de différents secteurs (S) de la lame de scie, dans lequel l'écartement radial des dents ou l'écartement radial moyen des plusieurs dents placées les unes à côté des autres de différents secteurs (S) est différent et la vitesse d'avancement (v) pendant une opération d'enlèvement de copeaux réalisée par des dents de secteurs (S1) ayant un plus grand écartement radial des dents par rapport au centre de rotation est choisie plus petite que pendant une opération d'enlèvement de copeaux réalisée par des dents de secteurs (S2) ayant un plus petit écartement radial des dents par rapport au centre de rotation, **caractérisé en ce que** les secteurs sont définis par mesure de l'écartement radial de chaque dent.

2. Procédé selon la revendication 1, **caractérisé en ce que** la vitesse d'avancement (v) pendant une opération d'enlèvement de copeaux réalisée par des dents d'un secteur (S1) de la lame de scie comportant plusieurs dents placées les unes à côté des autres ayant le plus grand écartement radial moyen des dents par rapport au centre de rotation atteint une vitesse minimale (vₘᵢₙ) et la vitesse d'avancement (v) pendant une opération d'enlèvement de copeaux réalisée par des dents d'un secteur (S2) de la lame de scie comportant plusieurs dents placées les unes à côté des autres ayant le plus petit écartement radial moyen des dents par rapport au centre de rotation atteint une vitesse maximale (vₘₐₓ).

3. Procédé selon la revendication 1 ou 2, **caractérisé en ce que** la vitesse d'avancement (v) pendant une opération d'enlèvement de copeaux réalisée par des dents d'un secteur (S1) de la lame de scie comportant plusieurs dents placées les unes à côté des autres ayant le plus grand écartement radial moyen des dents par rapport au centre de rotation est une vitesse minimale (vₘᵢₙ) constante et la vitesse d'avancement (v) pendant une opération d'enlèvement de copeaux réalisée par des dents d'un secteur (S2) de la lame de scie comportant plusieurs dents placées les unes à côté des autres ayant le plus petit écartement radial moyen des dents par rapport au centre de rotation est une vitesse maximale (vₘₐₓ) constante.

4. Dispositif d'enlèvement de copeaux comprenant une lame de scie munie de dents, une installation d'entraînement destinée à faire tourner la lame de scie autour d'un centre de rotation ainsi qu'une installation d'avancement destinée à obtenir un mouvement relatif de la lame de scie par rapport à une pièce d'œuvre, dans lequel l'installation d'avancement comprend une unité de contrôle pour le contrôle de la vitesse d'avancement (v) de la lame de scie par rapport à la pièce d'œuvre et la lame de scie comporte des secteurs (S) comprenant chacun une dent ou plusieurs dents placées les unes à côté des autres, dans lequel l'unité de contrôle est conçue pour contrôler différemment la vitesse d'avancement (v) pendant un tour complet de la lame de scie autour du centre de rotation pendant une opération d'enlèvement de copeaux réalisée par des dents de différents secteurs (S) de la lame de scie, en cela que la vitesse d'avancement (v) pendant une opération d'enlèvement de copeaux réalisée par des dents de secteurs (S1) de la lame de scie ayant un plus grand écartement radial des dents par rapport au centre de rotation ou un plus grand écartement radial moyen des plusieurs dents placées les unes à côté des autres par rapport au centre de rotation est plus petite que pendant une opération d'enlèvement de copeaux réalisée par des dents de secteurs (S2) de la lame de scie ayant un plus petit écartement radial des dents par rapport au centre de rotation ou un plus petit écartement radial moyen des plusieurs dents placées les unes à côté des autres par rapport au centre de rotation, **caractérisé en ce qu'**est prévue une installation de mesure destinée à mesurer l'écartement radial des dents par rapport à un centre de rotation de la lame de scie, qui est connectée à l'unité de contrôle.
